# EUROPÄISCHE PATENTSCHRIFT

(11) **EP 2 930 289 B1**
(45) Veröffentlichungstag und Bekanntmachung des Hinweises auf die Patenterteilung: **22.08.2018**
(21) Anmeldenummer: 15161391.6
(22) Anmeldetag: 27.03.2015
(51) Int. Cl.: E05B 9/04, B30B 1/00, B23P 19/02

(54) **SCHLIEßZYLINDER UND MONTAGEVORRICHTUNG**
LOCKING CYLINDER AND INSTALLATION DEVICE
BARILLET ET DISPOSITIF DE MONTAGE

(30) Priorität: 31.03.2014 DE 102014205960
(43) Veröffentlichungstag der Anmeldung: 14.10.2015
(73) Patentinhaber: BKS GmbH, 42549 Velbert (DE)
(72) Erfinder: Hennecke, Gerhard, 42555 Velbert (DE); Pulig, Marco, 59348 Lüdlinghausen (DE); Nguyen, Toan, 42579 Heiligenhaus (DE); Ziaja, Klaus, 45130 Essen (DE)
(74) Vertreter: DREISS Patentanwälte PartG mbB

(56) Entgegenhaltungen:
- EP-A2- 0 272 120
- EP-A2- 0 748 908
- EP-A2- 2 436 855
- WO-A1-2012/063101
- CH-A2- 706 692

## Beschreibung

Die Erfindung betrifft einen Schließzylinder mit den Merkmalen des Oberbegriffs des Patentanspruchs 1, gemäß EP 0 748 908 A2.
Die Erfindung betrifft ferner eine Anordnung, umfassend eine aus zumindest zwei Gehäuseteilen (30) bestehende Baugruppe (90) eines Schließzylinders und eine Montagevorrichtung zur Montage einer Baugruppe eines Schließzylinders.
Der vorliegenden Erfindung liegt die Aufgabe zugrunde, die Herstellung eines Schließzylinders zu vereinfachen.

Diese Aufgabe wird bei einem Schließzylinder der eingangs genannten Art erfindungsgemäß durch die kennzeichnenden Merkmale des Patentanspruchs 1 gelöst. Diese Aufgabe wird auch durch eine Anordnung mit den Merkmalen des Anspruchs 9 gelöst.

Der erfindungsgemäße Schließzylinder ermöglicht einen modularen Aufbau eines Gehäuses. Die Gehäuselänge zwischen Außenseite und Innenseite lässt sich somit durch Auswahl einer Anzahl insbesondere unterschiedlich großer Gehäuseteile bestimmen. Durch die reibschlüssige Verbindung der Gehäuseteile ist es möglich, dass die Gehäuseteile parallel zur Schließkernachse Längenmaße aufweisen, welche mit relativ großen Toleranzen behaftet sein können. Der bei einem Formschluss nicht mögliche Ausgleich von Toleranzen erfolgt erfindungsgemäß mittels der reibschlüssigen Verbindung der Gehäuseteile.

Bei dem erfindungsgemäßen Schließzylinder handelt es sich vorzugsweise um einen Profil-Schließzylinder, beispielsweise um einen Profil-Halbzylinder oder um einen Profil-Doppelzylinder.

Eine weitere Vereinfachung der Herstellbarkeit des Schließzylinders ergibt sich, wenn aneinander angrenzende Gehäuseteile mittels Formschlusselementen miteinander in Drehrichtung formschlüssig verbunden sind. Auf diese Weise können die Gehäuseteile in Drehrichtung relativ zueinander fixiert werden, sodass die Gehäuseteile eine Baugruppe bilden, welche einfach handhabbar ist und in einfacher Weise mit weiteren Teilen des Schließzylinders verbunden werden kann.

Erfindungsgemäß ist vorgesehen, dass ein erstes Gehäuseteil sich senkrecht zu der Schließkernachse erstreckende und voneinander abgewandte erste und zweite Gehäuseteilseiten aufweist, und dass an der ersten Gehäuseteilseite ein Steckvorsprung zum Einstecken in eine Steckaufnahme eines zweiten Gehäuseteils und an der zweiten Gehäuseteilseite eine Steckaufnahme zur Aufnahme eines Steckvorsprungs eines dritten Gehäuseteils angeordnet ist. Auf diese Weise können miteinander an ihren Gehäuseteilseiten identisch ausgebildete Gehäuseteile in einfacher Weise miteinander gefügt werden, indem jeweils ein Steckvorsprung eines Gehäuseteils in eine Steckaufnahme eines angrenzenden Gehäuseteils eingesteckt wird.

Erfindungsgemäß ist der Steckvorsprung in einer Ebene quer zu der Schließkernachse geringfügig größer als eine Steckaufnahme, sodass der Steckvorsprung zum Einstecken in die Steckaufnahme geringfügig verformt wird und somit reibschlüssig in der Steckaufnahme aufgenommen ist.

Bevorzugt ist es ferner, wenn der Steckvorsprung parallel zur Schließkernachse gemessen kleiner ist als die Steckaufnahme. Dies ermöglicht einen besonders guten Ausgleich von Längentoleranzen. Im Extremfall, der zu einer zu kurzen Gehäusegesamtlänge führt, liegen die Gehäuseteile mit ihren Gehäuseteilseiten aneinander an, da die Steckaufnahme eine größere Einstecktiefe bereithält, als es für ein vollständiges Einstecken des Steckvorsprungs erforderlich ist.

Für eine stabile Konstruktion ist es bevorzugt, dass der Steckvorsprung und die Steckaufnahme sich ringförmig um die Schließkernachse erstrecken.

Ein besonders guter Reibschluss zwischen benachbarten Gehäuseteilen wird erreicht, wenn der Steckvorsprung eine Außenverzahnung und die Steckaufnahme eine hohlzylindrische Klemmfläche aufweist, oder wenn der Steckvorsprung zylindrisch ist und die Steckaufnahme eine Innenverzahnung aufweist.

Die Gehäuseteile sind vorzugsweise urformend hergestellt, beispielsweise als metallisches Druckgussteil oder als Spritzgussteil aus einem Kunststoffmaterial.

Für einen besonders variablen Aufbau eines Schließzylinders ist es bevorzugt, wenn eine Mehrzahl von Gehäuseteilen mit voneinander abweichenden, parallel zur Schließkernachse gemessenen Gehäuseteillängen bereitgestellt ist, und wenn die parallel zur Schließkernachse gemessene Gesamtlänge des Gehäuses durch Auswahl und reibschlüssige Verbindung einer Teilmenge der Mehrzahl von Gehäuseteilen bestimmbar ist.

Besonders ist es bevorzugt, wenn die Mehrzahl von Gehäuseteilen mindestens drei, vorzugsweise vier, insbesondere fünf unterschiedliche Gehäuseteillängen umfasst. Diese kann stationär im Fertigungsbereich eines Werks vorgehalten werden oder in Form eines mobilen Montage-/Reparatursets.

Vorzugsweise werden bei einer Mehrzahl von Gehäuseteilen folgende Gehäuseteillängen vorgehalten: 4mm und/oder 8mm und/oder 10mm und/oder 13mm und/oder 25mm. Die genannten Angaben beziehen sich auf den parallel zur Schließkernachse gemessenen Abstand zwischen einander abgewandten Gehäuseteilseiten, wobei die parallel zur Schließkernachse gemessene Länge eines Steckvorsprungs nicht mit enthalten ist. Die genannten Angaben verstehen sich als Mittelwert einer Längentoleranz von 0,2 mm (die genannte Gehäuseteillänge von 4 mm umfasst also einen Bereich von 3,9 mm bis 4,1 mm).
Zur Montage der vorstehend beschriebenen Gehäuseteile wird eine Anordnung vorgeschlagen, welche eine aus zumindest zwei Gehäuseteilen bestehende Baugruppe eines Schließzylinders und eine Montagevorrichtung umfasst, wobei die Montagevorrichtung einen Aufnahmeraum zur Anordnung von mindestens zwei Gehäuseteilen in einem nicht miteinander gefügten Vormontagezustand umfasst, ferner einen Anschlag zur Anlage einer Gehäuseteilseite eines ersten Gehäuseteils und einen Stempel zur Druckbeaufschlagung einer Gehäuseteilseite eines zweiten Gehäuseteils, wobei der Stempel relativ zu dem Anschlag bewegbar ist, sodass die Gehäuseteile miteinander reibschlüssig verpressbar sind. Durch Vorwahl eines gewünschten Abstands zwischen dem Anschlag der Montagevorrichtung und der Position des Stempels nach Abschluss des Verpressvorgangs kann die Gesamtlänge des Gehäuses des Schließzylinders oder einer Baugruppe des Gehäuses des Schließzylinders in einfacher Weise bestimmt werden.
Weitere Merkmale und Vorteile der Erfindung sind Gegenstand der nachfolgenden Beschreibung und der zeichnerischen Darstellung bevorzugter Ausführungsbeispiele.
In den Zeichnungen zeigen:
- Fig. 1: eine Seitenansicht einer Ausführungsform eines Schließzylinders;
- Fig. 2: eine perspektivische Vorderansicht eines Gehäuseteils des Schließzylinders gemäß Fig. 1;
- Fig. 3: eine perspektivische Rückansicht des Gehäuseteils gemäß Fig. 2;
- Fig. 4: eine Vorderansicht des Gehäuseteils gemäß Fig. 2;
- Fig. 5: eine Seitenansicht des Gehäuseteils gemäß Fig. 2 längs einer in Fig. 4 mit V - V bezeichneten Schnittebene;
- Fig. 6: eine Rückansicht des Gehäuseteils gemäß Fig. 2;
- Fig. 7: eine perspektivische Ansicht einer Ausführungsform einer Montagevorrichtung; und
- Fig. 8: eine Seitenansicht einer Baugruppe mit miteinander gefügten Gehäuseteilen.

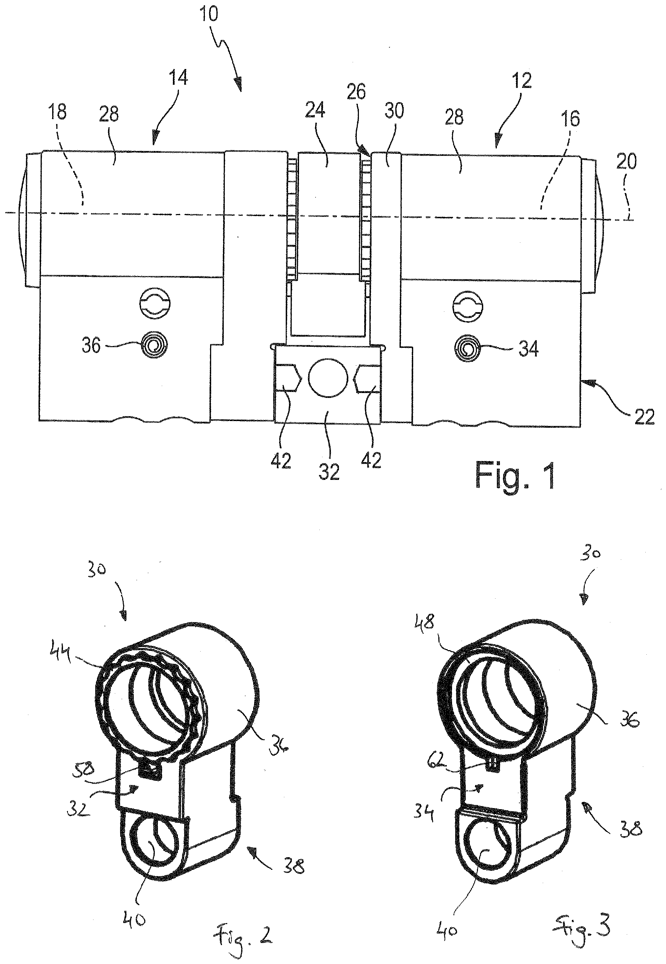

Eine Ausführungsform eines Schließzylinders ist in der Figur 1 dargestellt und dort insgesamt mit dem Bezugszeichen 10 bezeichnet. Der Schließzylinder 10 ist als Profil-Doppelzylinder ausgebildet und weist ein erstes Gehäuse 12 und ein zweites Gehäuse 14 auf. In jedem der Gehäuse 12, 14 ist ein Schließkern 16, 18 zugeordnet, welcher innerhalb der Gehäuse 12, 14 um eine Schließkernachse 20 drehbar ist. Das erste Gehäuse 12 erstreckt sich von einer Außenseite 22 zum Einführen eines Schlüssels in den Schließkern 16 bis hin zu einer zu einem Schließbart 24 benachbarten Innenseite 26.

Das Gehäuse 12 ist längs der Schließkernachse 20 gesehen aus mehreren Gehäuseteilen zusammengesetzt, beispielsweise aus einem Basisteil 28 zur Aufnahme des Schließkerns 16 und einem Gehäuseteil 30.

Der Abstand zwischen der Außenseite 22 und der Innenseite 26 ist durch Auswahl und Wahl der Anzahl unterschiedlich dimensionierter Gehäuseteile 30 einstellbar.

Zur Verbindung zwischen den Gehäusen 12 und 14 ist eine Verbindungsleiste 32 vorgesehen, welche mittels Verbindungselementen 34, 36 mit den Gehäusen 12, 14, insbesondere mit den Basisteilen 28 der Gehäuse 12, 14, verbunden ist.

Nachfolgend wird die Funktion und Geometrie eines Gehäuseteils 30 unter Bezugnahme auf die Figuren 2 bis 6 beschrieben. Das Gehäuseteil 30 erstreckt sich zwischen voneinander abgewandten Gehäuseteilseiten 32 und 34 (vergleiche Figuren 2, 3 und 5). Das Gehäuseteil 30 umfasst einen Ringkörper 36, welcher sich in dem in den Schließzylinder 10 eingebauten Zustand des Gehäuseteils 30 um die Schließkernachse 20 herum erstreckt. Das Gehäuseteil 30 weist ferner ein von dem Ringkörper 36 abragendes Fußteil 38 mit einem sich zwischen den Gehäuseteilseiten 32 und 34 erstreckenden Durchbruch 40 auf, welcher zur Aufnahme eines Bolzens 42 dient, der Teil der Verbindungsleiste 32 ist.

Das Gehäuseteil 30 weist an seiner ersten Gehäuseteilseite 32 einen Steckvorsprung 44 auf, welcher ringförmig ausgebildet ist und insbesondere mit einer Außenverzahnung 46 versehen ist.

Das Gehäuseteil 30 weist auf seiner der ersten Gehäuseteilseite 32 abgewandten zweiten Gehäuseteilseite 34 eine Steckaufnahme 48 auf, die ebenfalls ringförmig ausgebildet ist und eine hohlzylindrische Klemmfläche 50 aufweist, welche zur reibschlüssigen Aufnahme der Außenverzahnung 46 des Steckvorsprungs 44 eines benachbart angeordneten, weiteren Gehäuseteils 30 dient.

Der über die Außenseite der Verzahnungsberge der Außenverzahnung 46 gemessene Durchmesser des Steckvorsprungs 44 ist geringfügig größer als der Innendurchmesser der hohlzylindrischen Klemmfläche 50. Beispielsweise beträgt ein Unterschied zwischen den genannten Durchmessern zwischen ungefähr 0,05 und 0,2mm.

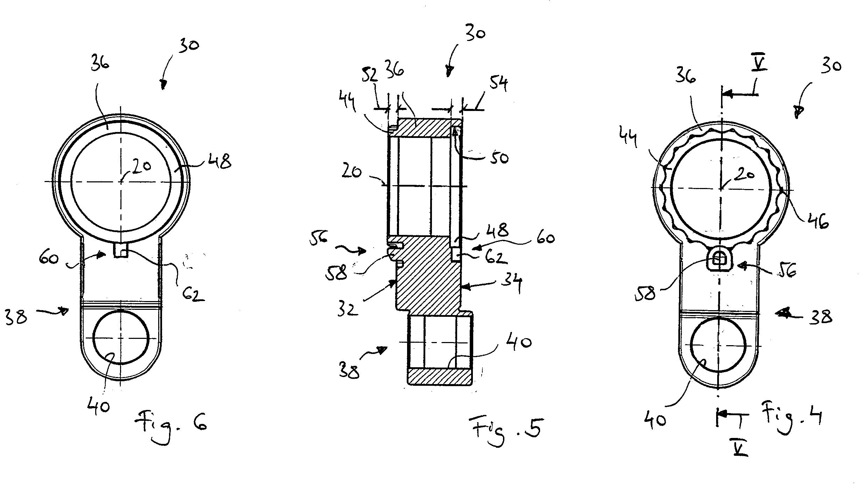

Eine parallel zu der Schließkernachse 20 gemessene Einstecktiefe des Steckvorsprungs 44 ist kleiner als eine parallel zu der Schließkernachse 20 gemessene Einstecktiefe 54 der Steckaufnahme 48 (vergleiche Figur 5).

Das Gehäuseteil 30 weist ferner an seiner ersten Gehäuseteilseite 32 ein erstes Formschlusselement 56, beispielsweise in Form eines Zapfens 58, auf, welcher mit einem zweiten Formschlusselement 60, beispielsweise in Form einer Zapfenaufnahme 62, derart zusammenwirkt, dass miteinander mittels Steckvorsprüngen 44 und Steckaufnahmen 48 miteinander reibschlüssig verbundene Gehäuseteile 30 in Drehrichtung um die Schließkernachse 20 formschlüssig miteinander verbunden sind.

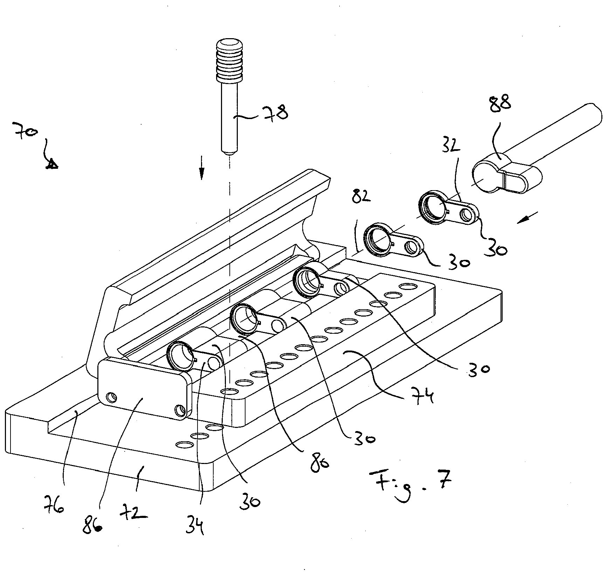

Eine Montagevorrichtung zur Montage einer Baugruppe für einen Schließzylinder 10 ist in Figur 7 dargestellt und dort insgesamt mit dem Bezugszeichen 70 bezeichnet. Die Montagevorrichtung 70 umfasst eine Basisplatte 72 zur Anordnung einer Montageplatte 74, welche längs einer Führung 76 relativ zu der Basisplatte 72 verschiebbar ist.

Die Basisplatte 72 und die Aufnahmeplatte 74 weisen in einem vorgegebenen Raster zueinander beabstandete Durchbrüche auf, welche miteinander in Fluchtlage gebracht werden können, sodass die Platten 72 und 74 mittels eines Sicherungsstifts 78 relativ zueinander gegen ein Verschieben gesichert werden können.

Die Aufnahmeplatte 74 weist einen Aufnahmeraum 80 zur Aufnahme einer Mehrzahl von Gehäuseteilen 30 längs einer Aufnahmeraumachse 82 auf. Der Aufnahmeraum 80 ist entlang der Aufnahmeraumachse 82 gesehen durch einen mit der Aufnahmeplatte 74 fest verbundenen Anschlag 86 sowie durch einen längs der Aufnahmeraumachse 82 bewegbaren Stempel 88 begrenzt.

Nach Anordnung von mindestens zwei Gehäuseteilen 30 in den Aufnahmeraum 80 wird der Stempel 88 in Richtung auf den Anschlag 86 bewegt, sodass eine der Gehäuseteilseiten, beispielsweise die zweite Gehäuseteilseite 34 eines ersten Gehäuseteils 30 mit dem Anschlag 86 in Anlage kommt und eine andere Gehäuseteilseite, beispielsweise eine erste Gehäuseteilseite 32 eines anderen Gehäuseteils 30 in Anlage mit dem Stempel 88 kommt. Zwischen den beiden Gehäuseteilen 30, welche jeweils mit einem der Bauelemente Anschlag 86, Stempel 88 in Anlage stehen, können weitere Gehäuseteile 30 angeordnet sein.

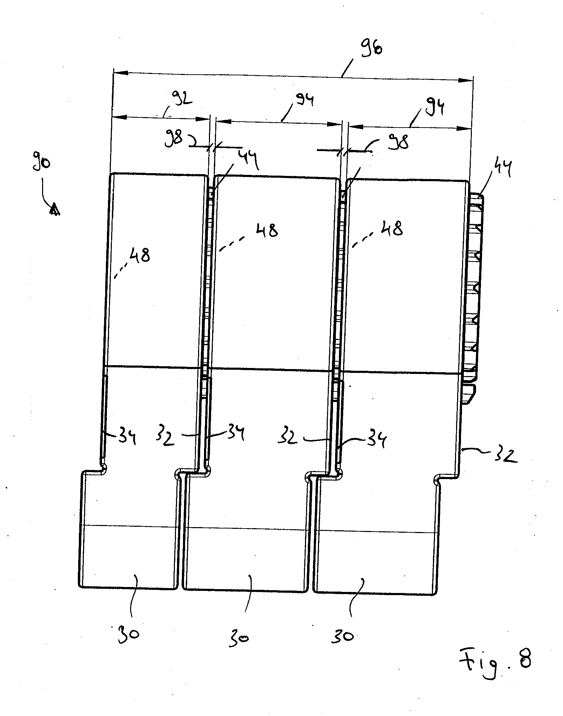

Beispielsweise können in dem Aufnahmeraum 80 drei Gehäuseteile 30 angeordnet sein, welche zu einer in Figur 8 dargestellten Baugruppe 90 miteinander gefügt werden, indem jeweilige Steckvorsprünge 44 eines Gehäuseteils 30 mit jeweiligen Steckaufnahmen 48 eines anderen Gehäuseteils 30 ineinandergesteckt und reibschlüssig miteinander verpresst werden.

Für das in Figur 8 dargestellte Beispiel von drei Gehäuseteilen 30 mit zwei unterschiedlichen Gehäuseteillängen 92 und 94 kann eine Gesamtlänge 96 erzeugt werden, welche sich aus der Summe der Gehäuseteillängen 92, 94 und 94 zusammensetzt, sowie aus Toleranzausgleichslängen 98, welche sich jeweils im Bereich der Verbindung zwischen einem Steckvorsprung 44 und einer Steckaufnahme 48 ergeben, und zwar dadurch, dass die Steckvorsprünge 44 nicht vollständig in die Steckaufnahme 48 eingesteckt sind, relativ zueinander benachbarte Gehäuseteilseiten 32 und 34 also nicht aneinander anliegen.

## Patentansprüche

1. Schließzylinder (10) mit einem in einem Gehäuse (12) drehbar angeordneten Schließkern (16), wobei sich das Gehäuse (12) entlang einer Schließkernachse (20) zwischen einer Außenseite (22) zum Einführen eines Schlüssels in den Schließkern (16) bis hin zu einer zu einem Schließbart (24) benachbarten Innenseite (26) erstreckt, wobei das Gehäuse (12) entlang der Schließkernachse (20) aus mindestens zwei Gehäuseteilen (28, 30) zusammengesetzt ist und dass die Gehäuseteile (28, 30) miteinander reibschlüssig verbunden sind, wobei ein erstes Gehäuseteil (30) sich senkrecht zu der Schließkernachse (20) erstreckende und voneinander abgewandte erste und zweite Gehäuseteilseiten (32, 34) aufweist und wobei an der ersten Gehäuseteilseite (32) ein Steckvorsprung (44) zum Einstecken in eine Steckaufnahme (48) eines zweiten Gehäuseteils (30) und an der zweiten Gehäuseteilseite (34) eine Steckaufnahme zur Aufnahme eines Steckvorsprungs (44) eines dritten Gehäuseteils (30) angeordnet ist, **dadurch gekennzeichnet, dass** der Steckvorsprung (44) in einer Ebene quer zu der Schließkernachse (20) geringfügig größer als die Steckaufnahme (48) ist, sodass der Steckvorsprung (44) zum Einstecken in die Steckaufnahme (48) geringfügig verformt wird und somit reibschlüssig in der Steckaufnahme (48) aufgenommen ist.

2. Schließzylinder (10) nach Anspruch 1, **dadurch gekennzeichnet, dass** aneinander angrenzende Gehäuseteile (30) mittels Formschlusselementen (56, 60) miteinander in Drehrichtung formschlüssig verbunden sind.

3. Schließzylinder (10) nach einem der voranstehenden Ansprüche, **dadurch gekennzeichnet, dass** der Steckvorsprung (44) parallel zur Schließkernachse (20) gemessen kleiner ist als die Steckaufnahme (48).

4. Schließzylinder (10) nach einem der voranstehenden Ansprüche, **dadurch gekennzeichnet, dass** der Steckvorsprung (44) und die Steckaufnahme (48) sich ringförmig um die Schließkernachse (20) erstrecken.

5. Schließzylinder (10) nach einem der voranstehenden Ansprüche, **dadurch gekennzeichnet, dass** der Steckvorsprung (44) eine Außenverzahnung (46) und die Steckaufnahme (48) eine hohlzylindrische Klemmfläche (50) aufweist oder dass der Steckvorsprung (44) zylindrisch ist und die Steckaufnahme (48) eine Innenverzahnung aufweist.

6. Schließzylinder (10) nach einem der voranstehenden Ansprüche, **dadurch gekennzeichnet, dass** eine Mehrzahl von Gehäuseteilen (30) mit voneinander abweichenden, parallel zur Schließkernachse (20) gemessenen Gehäuseteillängen (92, 94) bereitgestellt ist und dass die parallel zur Schließkernachse (20) gemessene Gesamtlänge (96) des Gehäuses (12) durch Auswahl und reibschlüssige Verbindung einer Teilmenge der Mehrzahl von Gehäuseteilen (30) bestimmbar ist.

7. Schließzylinder (10) nach Anspruch 6, **dadurch gekennzeichnet, dass** die Mehrzahl von Gehäuseteilen (30) mindestens drei, vorzugsweise vier, insbesondere 5 unterschiedliche Gehäuseteillängen (92, 94) umfasst.

8. Schließzylinder (10) nach Anspruch 6 oder 7, **dadurch gekennzeichnet, dass** als Gehäuseteillängen (92, 94) vorgehalten sind: 4 mm und/oder 8 mm und/oder 10 mm und/oder 13 mm und/oder 25 mm.

9. Anordnung, umfassend eine aus zumindest zwei Gehäuseteilen (30) bestehende Baugruppe (90) eines Schließzylinders (10) nach einem der voranstehenden Ansprüche und eine Montagevorrichtung (70) zur Montage dieser Baugruppe (90), wobei die Montagevorrichtung umfasst: einen Aufnahmeraum (80) zur Anordnung von mindestens zwei Gehäuseteilen (30) in einem nicht miteinander gefügten Vormontagezustand, einen Anschlag (86) zur Anlage einer Gehäuseteilseite (34) eines ersten Gehäuseteils (30), einen Stempel (88) zur Druckbeaufschlagung einer Gehäuseteilseite (32) eines zweiten Gehäuseteils (30), wobei der Stempel (88) relativ zu dem Anschlag (86) bewegbar ist, sodass die Gehäuseteile (30) miteinander reibschlüssig verpressbar sind.

## Claims

1. Lock cylinder (10) comprising a lock plug (16) that is rotatably arranged in a housing (12), the housing (12) extending along a lock plug axis (20) from an outer face (22) for inserting a key into the lock plug (16) as far as an inner face (26) that is adjacent to a locking bit (24), the housing (12) along the lock plug axis (20) being composed of at least two housing parts (28, 30) and the housing parts (28, 30) being frictionally interconnected, a first housing part (30) comprising first and second housing part sides (32, 34) that extend perpendicularly to the lock plug axis (20) and face away from one another and a plug-in projection (44) being arranged on the first housing part side (32) for being inserted into a socket (48) of a second housing part (30) and a socket being arranged on the second housing part side (34) for receiving a plug-in projection (44) of a third housing part (30), **characterized in that** the plug-in projection (44) is slightly larger than the socket (48) in a plane that is perpendicular to the lock plug axis (20), so that the plug-in projection (44) for being inserted into the socket (48) is slightly deformed and is therefore frictionally received in the socket (48).

2. Lock cylinder (10) according to claim 1, **characterized in that** adjacent housing parts (30) are interlocked in the direction of rotation by means of interlocking elements (56, 60).

3. Lock cylinder (10) according to either of the preceding claims, **characterized in that** the plug-in projection (44) is smaller than the socket (48) when measured in parallel with the lock plug axis (20).

4. Lock cylinder (10) according to any of the preceding claims, **characterized in that** the plug-in projection (44) and the socket (48) extend annularly around the lock plug axis (20).

5. Lock cylinder (10) according to any of the preceding claims, **characterized in that** the plug-in projection (44) comprises an outer toothing (46) and the socket (48) comprises a hollow-cylindrical clamping surface (50), or **in that** the plug-in projection (44) is cylindrical and the socket (48) comprises an inner toothing.

6. Lock cylinder (10) according to any of the preceding claims, **characterized in that** a plurality of housing parts (30) comprising housing part lengths (92, 94) that are different from one another and are measured in parallel with the lock plug axis (20) is provided, and **in that** the entire length (96) of the housing (12) measured in parallel with the lock plug axis (20) can be determined by selecting and frictionally connecting a portion of the plurality of housing parts (30).

7. Lock cylinder (10) according to claim 6, **characterized in that** the plurality of housing parts (30) comprises at least three, preferably four, in particular five, different housing part lengths (92, 94).

8. Lock cylinder (10) according to claim 6 or claim 7, **characterized in that** the following lengths are provided as housing part lengths (92, 94): 4 mm and/or 8 mm and/or 10 mm and/or 13 mm and/or 25 mm.

9. Arrangement, comprising a component group (90), consisting of at least two housing parts (30), of a lock cylinder (10) according to any of the preceding claims and an assembly device (70) for assembling said component group (90),
wherein the assembly device comprises a receiving space (80) for arranging at least two housing parts (30) in a non-joined pre-assembly state, a stop (86) for abutting a housing part side (34) of a first housing part (30), a stamp (88) for applying pressure to a housing part side (32) of a second housing part (30), wherein the stamp (88) is movable relative to the stop (86), such that the housing parts (30) can be frictionally pressed together.

## Revendications

1. Barillet de serrure (10) avec un coeur de serrure (16) agencé de manière rotative dans un boîtier (12), dans lequel le boîtier (12) s'étend le long d'un axe de coeur de serrure (20) entre un côté extérieur (22) pour l'insertion d'une clé dans le coeur de serrure (16) et un côté intérieur (26) adjacent à un panneton de serrure (24), dans lequel le boîtier (12), le long de l'axe de coeur de serrure (20), est constitué d'au moins deux parties de boîtier (28, 30), et dans lequel les parties de boîtier (28, 30) sont reliées l'une à l'autre par friction, dans lequel une première partie de boîtier (30) présente des premier et second côtés de partie de boîtier (32, 34) s'étendant perpendiculairement à l'axe de coeur de serrure (20) et étant opposés l'un à l'autre, et dans lequel, au niveau du premier côté de partie de boîtier (32) est agencée une saillie enfichable (44) pour une insertion dans un logement d'enfichage (48) d'une deuxième partie de boîtier (30), et au niveau du second côté de partie de boîtier (34) est agencé un logement d'enfichage pour la réception d'une saillie enfichable (44) d'une troisième partie de boîtier (30), **caractérisé en ce que** la saillie enfichable (44), dans un plan transversal à l'axe de coeur de serrure (20), est légèrement plus grande que le logement d'enfichage (48), de sorte que la saillie enfichable (44) pour une insertion dans le logement d'enfichage (48) est légèrement déformée, et est ainsi reçue par friction dans le logement d'enfichage (48).

2. Barillet de serrure (10) selon la revendication 1, **caractérisé en ce que** des parties de boîtier adjacentes (30) sont reliées l'une à l'autre par liaison de forme au moyen d'éléments de liaison de forme (56, 60) dans la direction de rotation.

3. Barillet de serrure (10) selon l'une quelconque des revendications précédentes, **caractérisé en ce que** la saillie enfichable (44) parallèle à l'axe de coeur de serrure (20) est mesurée plus petite que le logement d'enfichage (48).

4. Barillet de serrure (10) selon l'une quelconque des revendications précédentes, **caractérisé en ce que** la saillie enfichable (44) et le logement d'enfichage (48) s'étendent de manière circulaire autour de l'axe de coeur de serrure (20).

5. Barillet de serrure (10) selon l'une quelconque des revendications précédentes, **caractérisé en ce que** la saillie enfichable (44) comprend une denture externe (46) et le logement d'enfichage (48) comprend une surface de serrage cylindrique creuse (50), ou **en ce que** la saillie (44) est cylindrique et le logement d'enfichage (48) comprend une denture interne.

6. Barillet de serrure (10) selon l'une quelconque des revendications précédentes, **caractérisé en ce qu'**une pluralité de parties de boîtier (30) est fournie, avec des longueurs de partie de boîtier (92, 94) mesurées différentes les unes des autres parallèlement à l'axe de coeur de serrure (20), et **en ce que** la longueur totale mesurée (96) du boîtier (12) parallèlement à l'axe de coeur de serrure (20) peut être déterminée par sélection et liaison par friction d'une quantité partielle de la pluralité de parties de boîtier (30).

7. Barillet de serrure (10) selon la revendication 6, **caractérisé en ce que** la pluralité de parties de boîtier (30) comprend au moins trois, de préférence quatre, de manière plus préférée 5 longueurs de parties de boîtier (92, 94) différentes.

8. Barillet de serrure (10) selon la revendication 6 ou 7, **caractérisé en ce que** sont retenues en tant que longueurs de partie de boîtier (92, 94) : 4 mm et/ou 8 mm et/ou 10 mm et/ou 13 mm et/ou 25 mm.

9. Agencement, comprenant un ensemble (90) d'au moins deux parties de boîtier (30) d'un barillet de serrure (10) selon l'une quelconque des revendications précédentes et un dispositif de montage (70) pour le montage de cet ensemble (90),
dans lequel le dispositif de montage
comprend : un espace de réception (80) pour l'agencement d'au moins deux parties de boîtier (30) non reliés entre eux dans un état avant assemblage, une butée (86) pour mise en butée d'un côté de partie de boîtier (34) d'une première partie de boîtier (30), un poinçon (88) pour exercer une pression sur un côté de partie de boîtier (32) d'une deuxième partie de boîtier (30), dans lequel le poinçon (88) est mobile par rapport à la butée (86), de sorte que les parties de boîtier (30) peuvent être comprimées les unes avec les autres par friction.
